# EUROPÄISCHE PATENTANMELDUNG

(11) **EP 4 725 595 A1**
(43) Veröffentlichungstag der Anmeldung: **15.04.2026**
(21) Anmeldenummer: 24205454.2
(22) Anmeldetag: 09.10.2024
(51) Int. Cl.: B01J 23/42, B01J 35/30, B01J 35/45

(54) **KATALYSATOR, INSBESONDERE ZUR UMWANDLUNG VON SCHWEFELDIOXID ZU SCHWEFELTRIOXID**

(71) Anmelder: P & P Industries AG, 8074 Raaba-Grambach (AT)
(72) Erfinder: Hofer, Johannes, 8073 Feldkirchen bei Graz (AT)
(74) Vertreter: Schwarz & Partner Patentanwälte GmbH

(57) **Zusammenfassung**

Die Erfindung betrifft einen Katalysator, umfassend einen Träger und eine katalytisch aktive ausgehärtete Beschichtung, wobei der Träger aus einer Keramik besteht und die aktive Beschichtung platinhaltige Partikel enthält. Der erfindungsgemäße Katalysator ist dadurch gekennzeichnet, dass die katalytisch aktive Beschichtung SiO₂ in einem Anteil von 75 Gew.- % bis 85 Gew.-% und Al₂O₃ in einem Anteil von 5 Gew.-% bis 8 Gew.-% umfasst, und dass die durchschnittliche Partikelgröße der platinhaltigen Partikel 15 nm und weniger, bevorzugt 10 nm und weniger beträgt. Die Erfindung betrifft weiters ein Verfahren zur Herstellung des erfindungsgemäßen Katalysators sowie dessen Verwendung in Oxidationsreaktionen.

## Beschreibung

Die vorliegende Erfindung betrifft einen Katalysator, insbesondere zur Umwandlung von Schwefeldioxid zu Schwefeltrioxid.

Der erfindungsgemäße Katalysator umfasst einen keramischen Träger und eine poröse katalytisch aktive Beschichtung, wobei die katalytisch aktive Beschichtung Platin sowie Platinoxide umfasst.

### Hintergrund der Erfindung

Schwefelsäure (H₂SO₄) ist derzeit und auch historisch bedingt die wichtigste der Mineralsäuren. Sie wird gemäß dem gängigen Stand der Technik aus schwefelhaltigen Medien wie Schwefelwasserstoff (H₂S), Kohlenstoffdisulfid (CS₂), Carbonylsulfid (COS), Schwefel (S), der sauber in Raffinerien über die Entschwefelung der dort hergestellten Erzeugnisse erarbeitet wird, bzw. aus schwefelhaltigen Abgasen wie sie bei Röstprozessen zur Gewinnung von Metallen (wie zum Beispiel Kupfer aber auch Uran) vorkommen, erzeugt. Hierzu sind Katalysatoren notwendig, da die Oxidation von Schwefeldioxid (SO₂) zu Schwefeltrioxid (SO₃), das in weiterer Folge mit Wasser (H₂O) zur Schwefelsäure reagiert kinetisch gehindert ist. Für konzentrierte Schwefelsäure sind Konzentrationen von 93 - 99 Gewichtsprozent üblich. Konzentrierte Schwefelsäure, die mit Schwefeltrioxid angereichert ist, nennt man Oleum.

Die weltweiten Jahres-Produktionsmengen von Schwefelsäure werden derzeit mit ca. 250 - 320 Millionen metrischer Tonnen pro Jahr im Zeitraum von 2020 - 2030 angegeben (siehe hierzu https://www.statista.com/statistics/1245226/sulfuric-acid-market-volume-worldwide, abgefragt am 15.3.2024).

King, M. J., Davenport, W. G. und Moats, M. S. in Sulfuric Acid Manufacture Analysis, Control and Optimization, 2013, S. 13 f. beschreiben die Verwendung der Schwefelsäure wie folgt: Herstellung von Phosphatdünger (60 %), Verwendung in der chemischen Industrie (11 %), Herstellung von anderen Düngemitteln und Agrarchemikalien (10 %), Lösen von Erzen (7 %), Erdölaufbereitung (5 %), Herstellung von Gummi und Kunststoffen (3 %), Pigmentherstellung (2 %) sowie Karton- und Papiererzeugung (2 %).

Müller, H. in Sulfuric Acid and Sulfur Trioxide in Ullmanns Encyclopedia of Industrial Chemistry, 2012, S. 152 f. beschreibt den Stand der Technik für die industrielle katalytische Herstellung von Schwefelsäure. Hierzu erfolgt die Verwendung eines Vanadiumpentoxid-Katalysators, der auf Kieselgur immobilisiert ist und durch die Zugabe von Natrium, Kalium und Cäsium im Betrieb eine Schmelzphase bildet, in der die Reaktion vom Schwefeldioxid zum Schwefeltrioxid katalysiert wird. Bereits in dieser Literaturstelle wird die historische Verwendung sowohl von Platin als auch Eisen als möglicher alternativer Katalysator angedeutet. Durch die Verwendung von Cäsium als Dotierstoff wird die Schmelztemperatur der aktiven Phase im Vanadiumoxid-basierten Katalysator weiter herabgesetzt, was zu einem früheren Zünden des Katalysators führt. Die Arbeitstemperaturen für konventionelle Vanadiumoxid-basierte Katalysatoren liegen im Bereich von 410 - 430 °C. Durch die Dotierung mit Cäsium wird eine niedrigere Arbeitstemperatur von 380 - 390 °C erreicht. Die Arbeitstemperatur dieser Katalysatoren ist nach oben hin bei ca. 600 - 650 °C begrenzt, da es zum Umbau der inneren Struktur des Trägermaterials kommen kann.

Goritschnig, P. beschreibt im Patent EP 3 792 220 A1 vom 12.9.2019, die Verwendung von Edelmetallkatalysatoren zur Oxidation von Schwefeldioxid in Schwefelsäureanlagen, ohne jedoch auf die Beschaffenheit des Katalysators näher einzugehen. In dieser Literaturstelle wird ausschließlich auf platinhaltige Wabenkatalysatoren verwiesen, ohne näher ins Detail zu gehen.

Lawrie, L. beschreibt in Handbook of Industrial Catalysts, 2011, S. 29 bis S. 36, die historische Entwicklung des sogenannten Kontaktprozesses zur Herstellung von Schwefelsäure im Zeitraum von 1831 bis ins Jahr 2000 mittels Katalysatoren. In diesem Zeitraum wurde immer wieder versucht Edelmetall zur Katalyse zu verwenden. Auffallend ist hier, dass die ersten platinhaltigen Oxidationskatalysatoren zur Herstellung von Schwefelsäure bis zu 8-10 Gewichtsprozent Platin enthielten (für Platin auf Asbestfasern). Ein weiterer Hinweis auf die Imprägnierung von Silicagel mittels Ammonium-Chloroplatinat zur Reduktion des Platin-Gehaltes auf ca. 0,1 Gewichtsprozent durch die Firma Davison Chemical Company wird gegeben.

Louie, D., K. verweist in Handbook of Sulphuric Acid Manufacturing, 2014, Abschnitt 3-1 bis 3-46 darauf, dass platinhaltige Katalysatoren aufgrund der Vergiftungsneigung durch Schwermetalle, insbesondere durch Arsentrioxid (As₂O₃) und der relativ hohen Kosten, durch verschiedene vanadiumoxidhaltige Katalysatoren, die im Detail dort beschrieben werden und teils bereits 1913 patentiert wurden, abgelöst worden sind.

Heutzutage sind für SOPs (Sulphur Oxidation Plants) die Schwefelqualitäten von Raffinerieschwefel wesentlich besser. Weiter sind die Möglichkeiten zur Gasaufreinigung für metallurgischen Schwefel, zum Beispiel bei Kupferröstofen wie von Davenport (Davenport, W. G. in Sulfuric Acid Manufacture - Analyis, Control and Optimization, 2013, S. 48 f.) beschrieben, und die Gasaufreinigung bei SAR (Spent Acid Regeneration; Schwefelsäureaufbereitung) Anlagen den historisch verfügbaren Apparaten überlegen.

Zusätzlich sind fortgeschrittene Technologien aus der Washcoat-Beschichtungstechnik verfügbar, die als Nebenprodukt der Autoabgasreinigung angesehen werden können.

Somit ist in der heutigen Zeit die Verwendung von Platin für die Katalyse der SO₂-Oxidation wieder interessant.

Der derzeitige Stand der Technik im Bereich der Katalyse in der Schwefelsäureherstellung ist durch Louie, D., K. in Handbook of Sulphuric Acid Manufacturing, 2014, in den Anhängen B2, B3 und B4 beschrieben.

Hierzu sind als allgemeine Patente zur Katalyse zu nennen (Anhang B2 aus Louie, D., K. in Handbook of Sulphuric Acid Manufacturing, 2014):
WO 2007/035949, US 2005/0720221, US 6521200, WO 1999/036175.

Als Stand der Technik zur Katalyse mittels Vanadiumpentoxid-Katalysatoren kann die folgende Aufstellung genannt werden (Anhang B3 Auswahl aus Louie, D., K. in Handbook of Sulphuric Acid Manufacturing, 2014): RU2174442C1, CA2318481A, DE 19800800, CA2324501A, CA2043539A, US5264200A, US5175136A, US5108976A, DE3401676A, EP 0151823, US4680281A, US4552744A und US 4539309.

Als Stand der Technik zur Katalyse mittels platinhaltigen bzw. Edelmetall-Katalysatoren kann die folgende Aufstellung genannt werden (Anhang B4 Auswahl aus Louie, D., K. in Handbook of Sulphuric Acid Manufacturing, 2014): CA2043539A, DE1020609B, DE1014079B, US2662861A, US2636863A, US2479109A, GB594463A, US2418851A, GB594461A, DE861695C, US2408396A, US2317683A, US2173916A, GB504048A, DE884349C, US 2123732, US 2200522, GB477026A, GB466721A, US2079840A, US2079404A, CA358784A, US2045632A, US2031787A, GB437659A, GB437658A, FR787837A, FR785082A, US2006222A, US2006221A, US2005412A, US1980829A, US1936154A, GB396712A, US1914835A, AT116361B, US1914458A, DE550826C, DE522958C, GB304269A, US1935188A, GB280939A, US 1782857, US1683694A, GB208656A, US1429222A, US1314952A, US1215396A, GB191502011, GB191501358A GB191408462A, GB191312981A, US1047236A, DE267868C, DE255071C, US971149A, DE225705C, DE218725C, DE188503C, US794512A, DE134928C, DE148196C, GB190210351A, GB 190204026, US 690133, GB190110729AGB190110412A, GB190106828A, US729735A, GB190000618, und US636925A. Zahlreiche Methoden zur Herstellung von katalytischen Beschichtungen sind weiters in Stiles, A. "Catalyst Manufacture", 2. Auflage 1995, CRC Press, offenbart.

In der BASF News Release P362/22e vom 28.9.2022 wurde der sogenannte X3D Katalysator vorgestellt, der über den Ansatz des 3D-Druckens hergestellt wird. Hierbei wird ein wabenförmiges 3D-Extrudat hergestellt, das den Druckverlust minimieren und die verfügbare Oberfläche maximieren soll. Diese Entwicklung kann als letzter großer Entwicklungsschritt in der Katalyse der SO₂-Oxidation mittels Vanadiumoxid angesehen werden.

In der vorliegenden Erfindung wird die Optimierung des Druckverlustes und die Erhöhung der Oberfläche jedoch auf technologisch weit weniger aufwändige Weise, mit höherem Erfolg, realisiert.

In den Patenten von Felthouse, T. R. wurden bereits monolithische Wabenkeramiken, die mit SiO₂ beschichtet wurden, publiziert und beschrieben. Verwiesen wird hier z.B. auf die US 5,175,136 A, die WO 2007/035949 A2 und US 4,582650.

Gemäß US 5,175,136 wird der siliziumhaltige Washcoat durch Tauchen in kolloidales Silizium-Sol realisiert (das auch zur Aufrechterhaltung der Bindung am Substrat dient). Als platinhaltige Rohstoffe dienen Pt(NH₃)₄ und Pt(SO₃)₂(OH). Zirkonoxid wird als Promoter eingesetzt. Auch in WO 2007/035949 A2 und US 4,582650 wird der kolloidale siliziumhaltige Washcoat durch ein Silizium-Sol realisiert.

Nijhuis, T., A. et al beschreiben in Catalysis Reviews, 43(4), 345-380 (2001) die wesentlichen Punkte bei der Herstellung von Washcoats für die Präparation von Heterogenkatalysatoren auf Wabenkeramiken. Diese Publikation kann als Stand der Technik für diese Art von Katalysatoren angesehen werden.

Insbesondere sind hier die Punkte der Variation der Zelldichte, Anforderungen an die Keramik-Monolithen für die Beschichtung im Allgemeinen, Präparationspfade für die Herstellung von Katalysator-Monolithen aus den Trägern, Eigenschaften der Poren im Verhältnis zur Tränksuspension, der Applikation derselben, der Trocknungsprozesse und der Schichtfixierung beschrieben.

Zur Herstellung von Katalysatoren mit platinhaltigen aktiven Beschichtungen wird dazu insbesondere die Ablagerung von Hexachlorplatinsäure (H₂PtCl₆) auf einem Alumina-Träger mittels Ionenaustausches beschrieben.

Kotsopoulos et al., Appl. Catalysis A: General 306 (2006) 142-148 beschreiben auf Platinbasierte Katalysatoren auf SiO₂ oder TiO₂-Trägern. Hier wird Platinchlorid auf dem jeweiligen Träger abgelagert und durch Reduktion mit einem H₂-hältigen Gas bei 500 °C metallisches Platin erhalten.

Bekannt ist weiters ein Platin-Oxidationskatalysator auf Wabenkeramik, wobei die aktive Beschichtung TiO₂ in Anatas-Form enthält. Die Platinbeschichtung wurde dabei auch hier durch Aufbringen einer Platinsalzlösung auf den Träger und anschließende Reduktion hergestellt. Es hat sich herausgestellt, dass es bei Reaktionstemperaturen von 550 °C oder höher zu einer Strukturumwandlung von Anatas zu Rutil kommt, was zu einem graduellen Abbau der Aktivität führte.

Aufgabe der vorliegenden Erfindung ist die Bereitstellung eines hochaktiven, stabilen und kostengünstigen Katalysators, insbesondere zur Herstellung von Schwefeltrioxid aus schwefelhalten Gasen, um daraus in weiterer Folge lagerstabiles Schwefeltrioxid, Schwefelsäure oder Oleum herzustellen. Weiter soll der Katalysator zur Oxidation von Schwefeldioxid in niedrig konzentrierten Gasen (mit unter 1 Volumenprozent SO₂) nützbar sein. Darüber hinaus soll der Katalysator geeignet sein, giftiges Kohlenmonoxid in Abgasströmen, die sowohl Fluorwasserstoff (HF), als auch für den Katalysator üblicherweise giftige Schwermetalle enthalten, sowie auch flüchtige organische Verbindungen zu oxidieren.

Diese Aufgabe wird durch den Katalysator gemäß Patentanspruch 1 gelöst. Weitere Aspekte der Erfindung betreffen die Herstellung des erfindungsgemäßen Katalysators sowie seine Verwendungen.

### Kurze Beschreibung der Abbildungen

Fig. 1 zeigt die Ergebnisse einer BET-Oberflächenmessung - sowohl die für den Gasaustausch verfügbare Oberfläche in m²/g als auch die Porengröße - für verschiedene Rohstoffe bzw. Rohstoffalternativen, die zur Herstellung des erfindungsgemäßen Katalysators eingesetzt werden können, bei verschiedenen Temperaturen im Ofen ausgelagert.
Fig. 2 zeigt die Partikelgrößenverteilung nach der Mahlung einer zur Herstellung des erfindungsgemäßen Katalysators dienenden Suspension nach unterschiedlichen Mahldauern.
Fig. 3 zeigt exemplarisch ein mögliches Temperaturprogramm zum Trocknen und Aushärten eines mit der aktiven Beschichtung getränkten Trägers. Aufgetragen ist die Temperatur des Katalysators im Ofen gegen die Zeit als Sollwertkurve.
Fig. 4 zeigt die Zündkurve eines nach 2 verschiedenen Verfahren hergestellten erfindungsgemäßen Katalysators im Vergleich zu einem dem Stand der Technik entsprechenden Vanadiumoxid-basiertem Katalysator auf Kieselgur am Messstand.
Fig. 5 zeigt das Gleichgewichtsdiagramm der SO₂-Oxidation in der Simulation einer klassischen mehrstufigen Schwefelsäure-Anlage (3+1) für den erfindungsgemäßen Katalysator im Vergleich zu zwei Katalysatoren gemäß Stand der Technik.
Fig. 6 zeigt die Bewertung des Druckverlustes am Katalysator für eine Doppelkontaktanlage zur Herstellung von Schwefelsäure mit einer Kapazität von 500 metrischen Tonnen pro Tag als Vergleich des erfindungsgemäßen Katalysators mit verschiedenen Katalysatoren gemäß dem Stand der Technik.
Fig. 7 zeigt ein elektronenmikroskopisches Bild des erfindungsgemäßen Katalysators. Dargestellt sind das Trägermaterial und die Gasaustauschschicht.
Fig. 8 zeigt transmissionselektronenmikroskopische Bilder der platinhaltigen Partikel auf einer Gasaustauschschicht des erfindungsgemäßen Katalysators.

### Detaillierte Beschreibung der Erfindung

Der erfindungsgemäße Katalysator umfasst einen Träger und eine katalytisch aktive ausgehärtete Beschichtung, wobei der Träger aus einer Keramik besteht und die aktive Beschichtung platinhaltige Partikel enthält, und ist dadurch gekennzeichnet, dass die katalytisch aktive Beschichtung SiO₂ und Al₂O₃ umfasst, und dass die durchschnittliche Partikelgröße der platinhaltigen Partikel 15 nm und weniger, bevorzugt 10 nm und weniger beträgt.

Die katalytisch aktive Beschichtung kann insbesondere in Form eines "Washcoats" auf den Träger aufgebracht sein. Daher wird für die katalytisch aktive Beschichtung in weiterer Folge auch der Begriff "Washcoat" verwendet.

Es wurde gefunden, dass durch die Kombination von SiO₂ und Al₂O₃ als Hauptbestandteile der aktiven Beschichtung und durch das Vorsehen von platinhaltigen Partikeln in einer sehr geringen Partikelgröße von 15 nm und weniger eine hochwirksame Katalysatorbeschichtung erhalten werden kann. Diese Beschichtung kann durch eine spezifische Kombination von Ausgangsstoffen und Verfahrensschritten, die im Folgenden näher beschrieben werden, erhalten werden.

Die Tatsache, dass die platinhaltigen Partikel sehr fein verteilt und zum Großteil in einer sehr geringen Partikelgröße von 15 nm und weniger vorliegen, führt zu einer hohen Dispersion und Verfügbarkeit der Partikel für reaktive Gase.

Transmissionselektronische Aufnahmen der aktiven Beschichtung des erfindungsgemäßen Katalysators zeigen eine durchschnittliche Partikelgröße der platinhaltigen Partikel von z.B. 2 nm bis 5 nm.

Einzelne Grobfraktionen an platinhaltigen Partikeln können einen Größenbereich von 50 nm bis 250 nm aufweisen.

Das Platin in der aktiven Beschichtung liegt wie an sich bekannt bevorzugt in der Form von metallischem Platin und/oder in der Form von Platin-Oxiden (PtO und/oder PtO₂) vor.

Der Gehalt der platinhaltigen Partikel, bezogen auf das gesamte Katalysatorvolumen (Träger und ausgehärtete Beschichtung) und bezogen auf metallisches Platin, beträgt bevorzugt von 0,02 g/L bis 1,48 g/L, insbesondere 0,15 g/L bis 1,3 g/L, besonders bevorzugt 0,02 g/L bis 1,3 g/L, insbesondere bevorzugt 0,02 g/L bis weniger als 0,4 g/L.

Es wurde gefunden, dass im erfindungsgemäßen Katalysator sehr geringe Mengen an Platin eingesetzt werden können und trotzdem eine gute Wirkung erreicht wird. Als Stand der Technik kann eine Raumbeladung von ca. 20 g Pt/ft³ Katalysator (ca. 0,7 g/L) angenommen werden. Die gegenständliche Erfindung kann mit der Hälfte bzw. auch nur einem Viertel dieser Menge an Edelmetall auskommen. Hierdurch wird auch eine wirtschaftlich attraktive Situation im Vergleich zum gängigen Vanadiumpentoxid-Katalysator geschaffen.

Die aktive Beschichtung des erfindungsgemäßen Katalysators enthält als Hauptbestandteile Al₂O₃ und SiO₂. Der Anteil an SiO₂ in der Beschichtung liegt von 75 Gew.-% bis 85 Gew.-%. Der Anteil von Al₂O₃ in der Beschichtung liegt von 5 Gew.-% bis 8 Gew.-%.

Das in der Beschichtung enthaltene SiO₂ weist bevorzugt eine Kieselgel-Morphologie auf. Bevorzugt wird als Ausgangsstoff für das in der Beschichtung enthaltene SiO₂ Kieselgel eingesetzt. Eine Kieselgel-Morphologie weist im Unterschied zu z.B. Kieselgur, welches eine Fernordnungsstruktur mit zylindrischen Ringstrukturen aufweist, eine schwammartige Struktur ohne nennenswerte Fernordnung auf.

Das in der Beschichtung enthaltene Al₂O₃ liegt bevorzugt in γ-Al₂O₃-Form vor. Als Ausgangsstoff für das in der Beschichtung enthaltene Al₂O₃ wird bevorzugt Böhmit eingesetzt. Besonders bevorzugt wird ein Böhmit mit Nitro-Gruppen eingesetzt.

Der Träger des erfindungsgemäßen Katalysators kann in an sich bekannter Weise aus Keramik bestehen. Als Material der Keramik eignen sich insbesondere Cordierit, Mullit, Korund, oder Korund-Mullit. Der Träger kann sowohl in Form eines Monoliths als auch in Form von Schüttgut vorliegen.

Bevorzugt ist der Träger ein wabenförmiger Monolith aus Cordierit.

Der keramische Träger für den erfindungsgemäßen Katalysator kann bevorzugt eine Zelldichte von 25 (ca. 38750 Zellen pro m²) bis 1000 (ca. 1.550.000 Zellen pro m²) CPSI (Cells Per Square Inch), bevorzugt 100 (ca. 155.000 Zellen pro m²) - 200 (ca. 310.000 Zellen pro m²) CPSI aufweisen.

Der keramische Träger kann Poren in der Form von Quadraten, Dreiecken, Kreisen, Hexagons oder Mischformen der genannten Formen, bevorzugt Quadrate, aufweisen.

Die aktive Beschichtung enthält bevorzugt zusätzlich Zirkoniumoxid. Zirkoniumoxid ist aus dem Stand der Technik als Promoter, insbesondere im Fall der Verwendung für die Oxidation von Schwefeldioxid, in Kombination mit Platin als katalytisch aktivem Element bekannt.

Der Anteil an Zirkoniumoxid, bezogen auf die aktive ausgehärtete Beschichtung, kann 0,05 - 1,5 Gew.-%, bevorzugt 0,7 - 1,3 Gew.-%, besonders bevorzugt 0,9 bis 1,00 Gew.-% betragen.

Die aktive Beschichtung enthält bevorzugt Boroxid. Boroxid weist einen Schmelzpunkt von ca. 475 °C auf. Es wird angenommen, dass das Boroxid bei den Temperaturen bei der Anwendung des Katalysators dazu beiträgt, durch Ausbildung einer interpartikulären Schmelzphase die ausgehärtete Beschichtung (Washcoat) zu immobilisieren und an den Trägerstein zu binden.

Der Anteil an Boroxid, bezogen auf die aktive ausgehärtete Beschichtung, kann 2 Gew.-% bis 3 Gew.-%, bevorzugt 2,6 Gew.-% bis 2,9 Gew.-% betragen.

Die aktive Beschichtung enthält bevorzugt Calciumsulfat. Calciumsulfat (Gips) wirkt in der aktiven Beschichtung als Binder. Die Verwendung von Calciumsulfat als Binder ist insbesondere beim Einsatz des erfindungsgemäßen Katalysators in der Oxidation von Schwefeldioxid zu Schwefeltrioxid von Vorteil, da Calciumsulfat als bereits vollständig sulfatiertes Salz in dieser Oxidationsreaktion nicht mehr mitreagieren kann.

Der Anteil an Calciumsulfat, bezogen auf die aktive Beschichtung, kann 6 Gew.-% bis 21 Gew.-%, bevorzugt, 8 Gew.-% bis 20 Gew.-%, insbesondere 12 Gew.-% betragen.

In einer bevorzugten Ausführungsform wird als ein Ausgangsstoff zur Herstellung des erfindungsgemäßen Katalysators ein Kieselgel, welches Calciumsulfat enthält, eingesetzt.

In einer besonders bevorzugten Ausführungsform enthält die aktive Beschichtung sowohl Zirkoniumoxid, Boroxid als auch Calciumsulfat, insbesondere bevorzugt jeweils in den oben angegebenen Anteilen.

Es wurde gefunden, dass der erfindungsgemäße Katalysator je nach Anwendungsbereich im Vergleich zu bekannten Katalysatoren deutlich geringere Zündtemperaturen (Strike Temperature) aufweist sowie höhere Ausbeuten (Space Time Yield) bewirkt.

Der erfindungsgemäße Katalysator kann mit einem Verfahren hergestellt werden, welches die folgenden Schritte umfasst:
a) Herstellen einer Suspension durch Mischen (in folgender Reihenfolge) von
   - Wasser
   - gegebenenfalls einem Vorläufer von Zirkoniumoxid
   - Boroxid
   - einem sauren oder basischen Chelatkomplexbildner
   - einer zur Bildung eines Puffers mit dem sauren oder basischen Chelatkomplexbildner befähigten Base oder Säure
   - einem löslichen Vorläufer von metallischem oder oxidiertem Platin,
   - einem organischen Dispergiermittel
   - Entschäumer
   - Böhmit mit freien Nitro-Gruppen
   - ein Kieselgel
   - eine Calciumsulfat-Quelle
b) gegebenenfalls Mahlen der Suspension
c) Tauchtränkung eines keramischen Trägers mit der gemahlenen Suspension
d) Trocknen und Aushärten des getränkten Trägers

Es wurde gefunden, dass es möglich ist, auf gängigen Keramik-Trägern (insbesondere Cordierit-Wabenkörper) eine katalytische Schicht für die Oxidation unterschiedlicher Moleküle aufzubringen, die aus günstigen und chemischen exakt definierten Komponenten aufgebaut werden kann.

Dies wird im Folgenden näher erläutert:
Wichtig ist zunächst die Einhaltung der Reihenfolge der oben angegebenen Schritte im Schritt a), da sich ansonsten ein instabiles bzw. hochviskoses Gel bilden könnte, was unter anderem zum Verlust der teuren edelmetallhaltigen Komponente führen kann.

Das im Schritt a) des erfindungsgemäßen Verfahrens eingesetzte Wasser (insbesondere hochreines Wasser) dient als Dispergiermittel. Der Anteil an Wasser in der am Ende des Schritts a) erhaltenen Suspension kann vorteilhaft zwischen 60 Gew.-% und 70 Gew.-% betragen.

Der Einsatz eines Vorläufers von Zirkoniumoxid bzw. von Boroxid dient den oben bei der Beschreibung des erfindungsgemäßen Katalysators beschriebenen Zwecken.

Im Unterschied zu bekannten Verfahren des Standes der Technik wird bevorzugt nicht Zirkoniumoxid als solches, sondern ein Vorläufer davon, insbesondere bevorzugt Zirkoniumnitrat eingesetzt.

Die Zugabemengen an z.B. Zirkoniumnitrat und Boroxid werden so gewählt, dass in der ausgehärteten Beschichtung die oben beschriebenen Anteile an Zirkoniumoxid und Boroxid resultieren.

Der Einsatz eines sauren oder basischen Chelatkomplexbildners dient insbesondere einer Stabilisierung der Oxidationsstufe der eingesetzten Platinverbindung, insbesondere bevorzugt Oxidationsstufe 2+.

Bevorzugt wird als saurer Chelatkomplexbildner Zitronensäure eingesetzt. Die Einsatzmenge an Zitronensäure kann zwischen 0,01 Gew.-% und 0,9 Gew.-%, bevorzugt 0,15 Gew.-% bis 0,25 Gew.-%, bezogen auf die gesamte Suspension, betragen.

Die Zugabe einer zur Bildung eines Puffers mit dem sauren oder basischen Chelatkomplexbildner befähigten Base oder Säure dient zur Einstellung des pH-Werts der Suspension. Ein vorteilhafter Ziel-pH in dieser Stufe liegt bei pH 11-12.

Bevorzugt wird als zur Bildung eines Puffers befähigte Base Ammoniak eingesetzt. Besonders bevorzugt werden in diesen Schritten Zitronensäure als Chelatkomplexbildner und Ammoniak als Pufferbildner eingesetzt.

Nach dem Einstellen des pH-Werts wird ein löslicher Vorläufer von metallischem oder oxidiertem Platin zugegeben. Als "löslich" wird insbesondere eine Platinverbindung verstanden, die unter den Bedingungen des erfindungsgemäßen Verfahrens, bis hin zum Schritt d) (Trocknen und Aushärten) löslich ist. Wenn Teile der eingesetzten Platinverbindung schon vor dem Schritt d) ausfallen, kann dies im Endprodukt zu Konzentrationsspitzen, unregelmäßiger Verteilung und zu hohen Partikelgrößen der resultierenden platinhaltigen Partikel führen.

Im Unterschied zu bekannten Verfahren des Standes der Technik (zum Beispiel US 5,175,136A) wird erfindungsgemäß nicht eine Platinverbindung auf eine zuvor bereits gebildete und auf einem Träger imprägnierte katalytische Beschichtung (Washcoat) abgeschieden, sondern bereits bei der Herstellung der zur Bildung der Beschichtung dienenden Suspension zugegeben. Im Unterschied zu den im Stand der Technik beschriebenen Ausgangsverbindungen wie Pt(NH₃)₄Cl₂*H₂O oder H₃Pt(SO₃)₂(OH) wird im erfindungsgemäßen Verfahren bevorzugt eine deutlich löslichere Platinverbindung, bevorzugt Platinnitrat, insbesondere bevorzugt Pt(II)(NO₃)₂ eingesetzt.

Diese lösliche Platinverbindung verbleibt bis nach dem Schritt c) (Imprägnieren des Trägers) in Lösung. Erst bei der Trocknung des Trägers wird die Verbindung abgeschieden und bei der Aushärtung das metallische Platin und/oder Platinoxide gebildet.

Das erfindungsgemäße Verfahren enthält somit keinen Schritt der Reduktion des Platins mit einem reduzierenden Gas, wie z.B. einem H₂-enthaltenden Gas.

Die eingesetzte Menge an der löslichen Platinverbindung orientiert sich am gewünschten Gehalt an metallischem oder oxidischem Platin im Katalysator, wie weiter oben angegeben. Über Routineversuche kann ermittelt werden, welchen Gehalt an der Platinverbindung die Suspension aufweisen soll, um nach Imprägnieren, Trocknen und Aushärten des Trägers den gewünschten Gehalt an Platin am fertigen Katalysator zu erhalten.

Schritt a) des erfindungsgemäßen Verfahrens umfasst weiters nach der Zugabe der Platinverbindung die Zugabe eines organischen Dispergiermittels. Geeignete Dispergiermittel können aus der Gruppe von nicht-ionischen Tensiden, insbesondere Alkylphenolethoxylate ausgewählt werden. Ein geeignetes Dispergiermittel ist unter dem Markennamen Cliqsperse^{®} 152 kommerziell erhältlich (Hersteller: Firma CLIQ) und ist ein glycol-ether-freies Alkylphenolethoxylat.

Die Zugabemenge des Dispergiermittels kann bei 0,38 Gew.-% bis 0,45 Gew.-% bezogen auf die gesamte Suspension liegen.

Schritt a) des erfindungsgemäßen Verfahrens umfasst weiters die Zugabe eines Entschäumers. Geeignete Entschäumer können auf Polysiloxan-Basis gebildet sein, wodurch der Eintrag von Fremdionen vermieden werden kann. Eine geeigneter Entschäumer ist unter dem Namen Foamstop^{®} neutral (Hersteller: Firma Kärcher) kommerziell erhältlich.

Die Zugabemenge des Entschäumers kann bei 0,01 Gew.-% bis 0,08 Gew.-% bezogen auf die gesamte Suspension liegen.

Als Ausgangsmaterial für das in der aktiven Beschichtung enthaltene Al₂O₃ wird erfindungsgemäß bevorzugt ein Böhmit mit freien Nitro-Gruppen eingesetzt. Böhmit (AIO(OH)) wird zur Fixierung der SiO₂-Schicht am Träger verwendet. AlO(OH) wird beim Aushärten (Kalzinierschritt) in γ-Al₂O₃ überführt. Es wird vermutet, dass die freien Nitrogruppen beim Aushärten des imprägnierten Trägers im Schritt d) zu lokalen Überhitzungen führen, die weiter zu einer verbesserten keramischen Bindung des SiO₂ aus dem weiter zugegebenen Kieselgel mit dem Cordierit Träger führen. Es wurde weiters gefunden, dass es bei Verwendung von reinem Böhmit (AlOOH) als Vorläufersubstanz für den Washcoat beim entstehenden γ-Al₂O₃, das danach ein Hauptbestandteil der Aktivschicht ist, im Einsatz zur Oxidation von SO₂ zur Bildung eines Sulfates aus dem Oxid kommt.

Eine geeigneter Böhmit mit freien Nitro-Gruppen ist unter dem Markennamen Disperal^{®} P2 kommerziell erhältlich (Hersteller: Fa. Sasol).

Die Zugabemenge des Böhmits mit freien Nitro-Gruppen wird so gering wie nötig gehalten, um den Katalysator beim Einsatz in der Oxidation von Schwefeldioxid zu Schwefeltrioxid so wenig anfällig wie möglich gegenüber Sulphatisierung zu machen.

Die Zugabemenge des Böhmits mit freien Nitro-Gruppen kann bei 2,2 Gew.-% bis 3,0 Gew.-% bezogen auf die gesamte Suspension liegen.

Es wurde gefunden, dass sich beim Einsatz des erfindungsgemäßen Katalysators zur Oxidation von beispielsweise Schwefeldioxid die hier als Sulphatisierung bezeichnete Reaktion von Al₂O₃ mit SO₂, SO₃ und H₂SO₄ unter oxidierenden Bedingungen bei der gegenständlichen Erfindung als vernachlässigbar erweist.

Als Quelle für das SiO₂ in der katalytisch aktiven Beschichtung wird erfindungsgemäß ein Kieselgel eingesetzt.

Im Stand der Technik wird für Vanadiumoxid-basierte Katalysatoren als SiO₂-Quelle häufig Kieselgur eingesetzt. Das erfindungsgemäße eingesetzte Kieselgel ist demgegenüber deutlich definierter in seinen Eigenschaften und besser für den Zweck der Erfindung geeignet. Insbesondere weist es eine wesentlich höhere BET-Oberfläche und eine klarer definierte Porosität auf. Weiter ist es günstiger als kolloidale Silica-Varianten, die im oben zitierten Stand der Technik eingesetzt werden.

Bevorzugt weist das eingesetzte Kieselgel auch nach thermischer Belastung wie z.B. beim Aushärten des Trägers eine hohe BET-Oberfläche, beispielsweise von ca. 300 m²/g bis 400 m²/g auf. Die hohe Oberfläche des Kieselgels trägt zur hohen Aktivität und der niedrigen Zündtemperatur des erfindungsgemäßen Katalysators bei.

Erfindungsgemäß wird bevorzugt ein Kieselgel eingesetzt, welches zusätzlich Gips (Calciumsulfat) aufweist. Das in diesem Material enthaltene Gips-Binder-System trägt zur Haftung der Suspension (Washcoat) direkt nach dem Tränken auf den Träger bei.

Ein geeignetes Kieselgel mit Gips-Anteil ist unter dem Namen Kieselgel G kommerziell erhältlich (Hersteller: Fa. Macherey-Nagel). Der Anteil an Gips in diesem Material liegt bei ca. 10 - 25 Gew.-%.

Die Zugabemenge des Kieselgels kann bei 10 Gew.-% bis 29 Gew.-% bezogen auf die gesamte Suspension liegen.

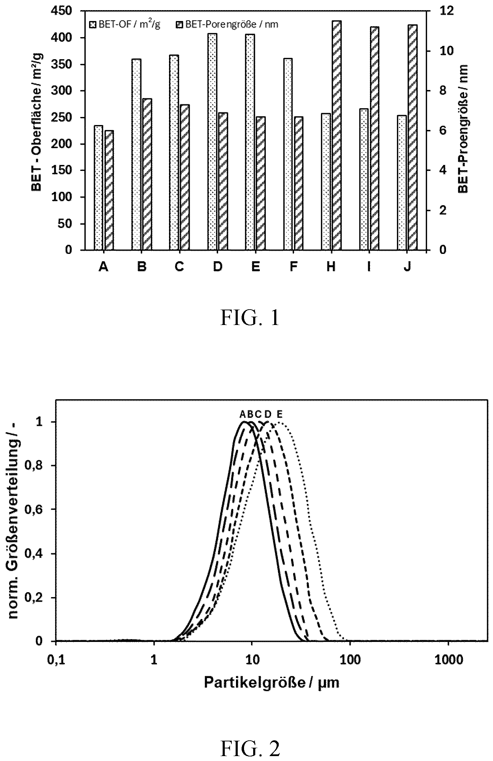

In Figur 1 sind die erhaltenen BET-Werte (Oberfläche und Porengröße) aus verschiedenen Rohstoffen bzw. Rohstoffalternativen nach Auslagerung bei verschiedenen Temperaturen dargestellt.

Dabei bedeuten:
Spalte A) Disperal^{®} P2 nach Kalzinierung für 3h bei 500 °C
Spalte B) Kieselgel 60 (Rohstoff)
Spalte C) Kieselgel 60 nach Kalzinierung für 3h bei 500 °C
Spalte D) Kieselgel G (Rohstoff)
Spalte E) Kieselgel G nach Kalzinierung für 3h bei 500 °C
Spalte F) Kieselgel G nach Kalzinierung für 3h bei 700 °C
Spalte G) Perikat 97.0 (Rohstoff)
Spalte H) Kieselgel N (Rohstoff)
Spalte I) Kieselgel N nach Kalzinierung für 3h bei 500 °C
Spalte J) Kieselgel N nach Kalzinierung für 3h bei 700 °C

Aus dem Diagramm ist erkennbar, dass Kieselgel G auch bei Auslagerung bei 700 °C seine BET-Oberfläche und Porengröße behält. Zusätzlich weist es im Vergleich zum Kieselgel N und Kieselgel 60 den Gipsbinder auf, der für die Erfindung vorteilhaft ist. Kieselgel N und Kieselgel G wären in ihrem Verhalten nach Zugabe eines passenden Bindersystems ebenfalls zur Synthese des erfindungsgemäßen Katalysators geeignet. Disperal^{®} P2 ist der bevorzugt verwendete Böhmit-Präkursor mit freien Nitrogruppen, der nach Auslagerung bei 500 °C eine BET-Oberfläche von ca. 250 m² aufweist.

Durch die oben genannten mehrstufigen Binder-Systeme, Gips, Boroxid und Böhmit mit freien Nitro-Gruppen kann der bei Nijhuis et al., Catalysis Reviews, 43:4 (2001); Seiten 345 - 380 genannte Zusatz von kolloidalen Partikeln umgangen werden. Hierdurch entsteht der zusätzliche Vorteil, relativ günstige Rohstoffe verwenden zu können.

Nach Fertigstellung der Suspension wird erfindungsgemäß im Schritt b) gegebenenfalls durch ein Mahlen der Suspension die Partikelgrößenverteilung eingestellt.

Es hat sich gezeigt, dass bei Befolgen der oben genannten Reihenfolge von Schritten im Schritt a) eine monomodale Partikelgrößenverteilung vorliegt.

Die Partikelgröße d₅₀ in der Suspension liegt dabei im Bereich von 20 µm bis 30 µm.

Es wurde gefunden, dass durch ein Mahlen der Suspension der katalytische Effekt der platinhaltigen Partikel deutlich gesteigert werden kann. Das bedeutet, dass mit einer geringeren Einsatzmenge an Platin die gleiche Effizienz beim Einsatz in einem Oxidationsverfahren erzielt werden kann.

Nijhuis et al.beschreiben für die dort erläuterten Substrate die optimale Einstellung der Partikelgrößenverteilung in einem Washcoat-Slurry durch Mahlen zu Partikelgrößen von ca. 5 µm.

Es wurde gefunden, dass zur Herstellung des erfindungsgemäßen Katalysators im Schritt b) die Einstellung einer Partikelgröße (d₅₀) von 6 µm bis 10 µm, bevorzugt 7 µm bis 9 µm vorteilhaft ist.

Durch das Einstellen der Partikelgröße wird die interpartikuläre Wechselwirkung aufgrund der Oberflächenerhöhung sowohl zwischen den Washcoat-Partikeln als auch mit dem Substrat und den Washcoat-Partikeln erhöht.

Figur 2 zeigt die Partikelgrößenverteilung nach der Mahlung einer zur Herstellung des erfindungsgemäßen Katalysators dienenden Suspension nach unterschiedlichen Mahldauern.

Dabei bedeuten die Kurven:
A) Mahldauer 0 Minuten (Suspension nach Schritt a))
B) Mahldauer 60 Minuten
C) Mahldauer 110 Minuten
D) Mahldauer 170 Minuten
E) Mahldauer 230 Minuten

Figur 2 zeigt, dass bereits nach der Herstellung der Suspension im Schritt a), also noch vor einem Mahlschritt, eine monomodale Partikelgrößenverteilung vorliegt. Die Suspension ist also im Vergleich zu ähnlichen Feststoff-Flüssigkeitsgemischen nicht multimodal. Sie zeigt weiter den Verlauf der Partikelgröße des zur Herstellung des erfindungsgemäßen Katalysators erforderlichen Washcoat-Slurries als Funktion der Mahldauer. Es wurde die auf 1 normierte Partikelgrößenverteilung einer Q3-Verteilung als Funktion der Partikelgröße bei unterschiedlichen Mahldauern dargestellt.

Durch das Mahlen kann sich die Viskosität der Suspension in einen für die nachfolgende Tränkung des Trägers unvorteilhaften Bereich verschieben. Diesem Viskositätsanstieg kann durch ein Verdünnen mit Wasser entgegengewirkt werden. Als Arbeitsviskosität hat sich ein Wert von 5 - 80 mPas, bevorzugt 40 mPas bewährt.

Im Schritt c) des erfindungsgemäßen Verfahrens erfolgt die Tauchtränkung des keramischen Trägers mit der gegebenenfalls gemahlenen Suspension aus Schritt a) bzw. b).

Im Folgenden wird die Tauchtränkung anhand eines monolithischen keramischen Trägers (im Folgenden auch "Stein" genannt) beschrieben.

Dabei kann der keramische Träger in an sich bekannter Weise in die Suspension eingetaucht werden.

Bevorzugt wird der keramische Träger vor dem Tränken mit der Suspension in deionisiertes Wasser getaucht und danach vom überschüssigen Wasser mit Hilfe von Druckluft befreit. Dieser Schritt ist günstig, um die übermäßige Aufnahme von Washcoat-Slurry bzw. das Verstopfen der Poren beim weiteren Tränken in der Suspension zu verhindern.

Nach diesem Schritt wird der feuchte Träger für ca. 5 - 10 Sekunden in die oben beschriebene Suspension getaucht und anschließend von überschüssiger Suspension befreit. Vor jedem Tränkschritt kann eine genaue Gewichtskontrolle des Trägersteins erfolgen, sodass die aufgebrachte Menge an Suspension stets verfolgt werden kann und die Ausblasedüsen entsprechend eingestellt werden können.

Für das Ausblasen von Wasser und Suspension kann ein Vordruck zwischen 1 - 10 bar, bevorzugt 6 bar Druckluft an die Druckluftflachdüsen angelegt werden.

Nach dem Tränkvorgang wird der Stein horizontal gelagert, sodass die Suspension sich in den Kanälen gleichmäßig verteilen kann. Der getränkte Trägerstein wird einige Stunden, bevorzugt für ca. 14 Stunden, bei ca. 20 °C gelagert. Hierdurch wird bereits eine bestimmte Menge an Feuchtigkeit abgegeben. Das ist insbesondere wichtig, um beim Trocknen das Ausblasen des Wassers durch schlagartige Dampfentwicklung zu verhindern. Weiter kommt es zum Abbinden der Suspension-Schicht mit dem Trägerstein. Der Vorgang ist vergleichbar mit dem Anziehen von Malerfarbe. Das in diesem Schritt aktive Binder-System ist der Gips aus dem oben beschriebenen Gips enthaltenden Kieselgel.

Im Fall eines monolithischen Trägers kann der keramische Träger eine geometrische Abmessung von 100 mm bis 400 mm x 100 mm bis 400 mm x 100 mm bis 1000 mm, bevorzugt 150 mm x 150 mm x 100 mm bis 300 mm aufweisen.

In einer Ausführungsform kann eine Zündschicht dahingehend hergestellt werden, dass von dem keramischen Träger nur 5 cm bis 15 cm, bevorzugt 10 cm in der Suspension getränkt werden.

Im Schritt d) des erfindungsgemäßen Verfahrens erfolgt das Trocknen und die Aushärtung (Kalzinierung) des getränkten Trägers.

Zur Trocknung von mit einer katalytisch aktiven Beschichtung getränkten Trägern sind zahlreiche Vorschläge bekannt, wovon einige wie z.B. Mikrowellen-Trocknung oder Gefriertrocknung aufwändiger und andere, wie z.B. statische Trocknung und erzwungener Luftfluss günstiger sind. Im erfindungsgemäßen Verfahren wird bevorzugt eine statische Trocknung gefolgt von einer Trocknung mittels erzwungenem Luftfluss eingesetzt.

Dabei ist es wichtig, eine Segregation des katalytisch aktiven Metalls zu vermeiden. Dies wird durch die im Folgenden beschriebenen bevorzugten Parameter des Schrittes d) erreicht.

Die nach der oben beschriebenen Lagerung erhaltenen getränkten Träger werden in einen Ofen, z.B. einem Hordenofen (Zirkulationsofen mit erzwungenem Luftfluss) eingebracht und einem Temperaturprogramm, bestehend aus den Schritten Trocknung, Binderausbrand und Kalzinierung, unterzogen. Während diesem Ofenprogramm findet der genannte erzwungene Luftfluss statt.

Die Temperaturrampen zwischen den einzelnen Schritten können zwischen 1 bis 10 °C/Min., bevorzugt 5 °C/Min. betragen.

Die Temperatur für das Trocknen liegt zwischen 80 - 160 °C, bevorzugt 140 °C. Die Haltezeit beim Trocknen beträgt zwischen 1 - 3 Stunden, bevorzugt 2 Stunden. Hier ist insbesondere die Wasseraufnahme des zu Grunde liegenden Grundkörpers vorab zu bewerten. Bei diesem Schritt dampft das als Suspensionsmittel verwendete Wasser vollständig ab und wird durch moderate Frischluftzufuhr aus dem Ofen ausgetragen.

Die Temperatur für den Binderausbrand liegt zwischen 300 - 400 °C, bevorzugt 350 °C. Die Haltezeit für den Binderausbrand beträgt 2 - 4, bevorzugt 3 Stunden. Der Binderausbrand erfolgt unter moderater Frischluftzufuhr. Sämtliche organische Komponenten werden in diesem Schritt zu CO₂ und H₂O oxidiert bzw. Nitrate teils zu Stickoxiden umgesetzt. Nach dem Binderausbrand kann bevorzugt sofort die Phase der Kalzinierung folgen, da der trockene und entbinderte Washcoat relativ lose auf dem Trägerstein aufliegt.

Die Temperatur für die Phase der Kalzinierung liegt zwischen 500 - 800 °C, bevorzugt 550 °C. Insbesondere um bei der Synthese größerer Mengen an Katalysator sicher zu sein, dass das Material in die gewünschte γ-Al₂O₃ Phase übergeht, wird beim Herstellprozess eine Kalziniertemperatur von 500 °C und mehr angewandt. Weiter führt die Erhöhung der Brenntemperatur auf 500 °C und mehr zu einer besseren Schichthaftung.

Die Haltezeit für die Kalzinierung liegt zwischen 3 - 5, bevorzugt 3 Stunden. In diesem Schritt findet die keramische Bindung der einzelnen Komponenten untereinander und mit dem Trägerstein statt. Die Zersetzung der Nitrate zu Stickoxiden findet vollständig statt. Metalle (Zirconium und Platin) werden oxidiert. Die Temperatur und Haltedauer werden bei der gegenständlichen Erfindung so gewählt, dass das Material nicht thermisch überlastet wird.

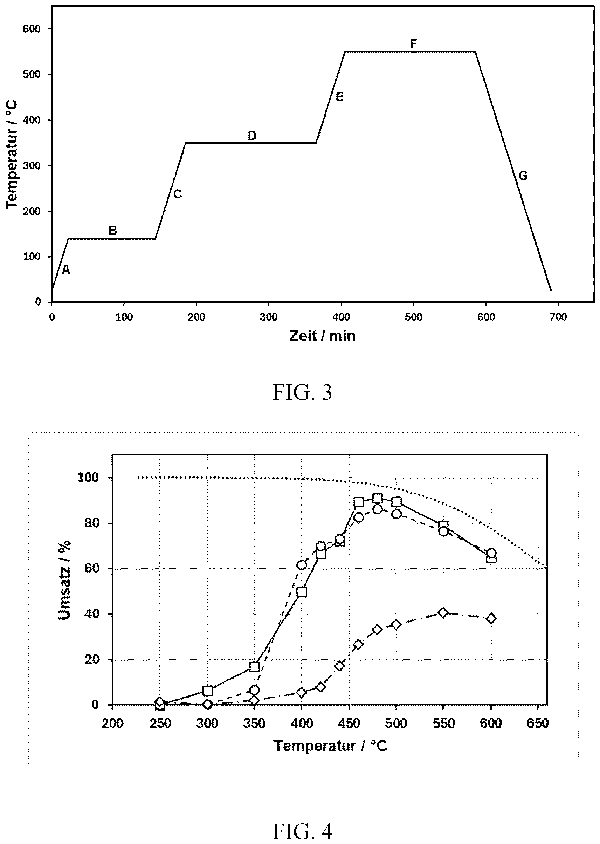

Figur 3 zeigt exemplarisch ein mögliches Temperaturprogramm zum Trocknen und Aushärten eines mit der aktiven Beschichtung getränkten Trägers. Aufgetragen ist die Temperatur des Katalysators im Ofen gegen die Zeit als Sollwertkurve.

Dabei bedeuten:
A) Aufheizphase ΔT = 5 °C/min
B) Trocknung bei 140 °C, Haltezeit 120 min
C) Aufheizphase, ΔT = 5 °C/min
D) Binderausbrand bei 350 °C, Haltezeit 180 min
E) Aufheizphase, ΔT = 5 °C/min
F) Kalzinierung bei 550 °C, Haltezeit 180 min
G) Abkühlphase, ΔT = 5 °C/min

Die so erhaltene Gasaustausch-Schicht des Katalysators besteht aus einer Mischung aus SiO₂ und Al₂O₃ mit relativ hohen BET-Oberflächen im Bereich von 300 - 400 m²/g. Weiter sind die Partikel der Gasaustauschschicht mit nanoskaligen Platin- und Platinoxidpartikeln dekoriert, die schlussendlich für die Oxidation der in Abgasströmen enthaltenen oxidierbaren Komponenten vorhanden sind (SO₂, H₂S, CO, CₓH_{y}, etc.).

Zusätzlich sind minimale Mengen an Zirkoniumoxid als Promoter und Boroxid und Calciumsulfat als Binder vorhanden.

Die Gasaustauschschicht liegt als raue und poröse Schicht vor. Sie besitzt sowohl eine hohe BET-Oberfläche als auch Poren, die in der Größenordnung von 6 - 12 nm, bevorzugt 7 nm liegen.

Die Schichtdicke der Gasaustauschschicht beträgt zwischen 10 - 100 µm. Bevorzugt sind für die gegenständliche Erfindung 45 - 55 µm.

Der fertige Katalysator weist nach der Beschichtung typischerweise eine BET-Fläche von 20.000 - 45.000 m², typischerweise 35.000 m² auf.

Zusammenfassend beruht das erfindungsgemäße Verfahren auf der Erkenntnis, dass es möglich ist, auf gängigen Cordierit Keramik-Wabenkörpern eine katalytische Schicht für die Oxidation unterschiedlicher Moleküle aufzubringen, die aus günstigen und chemischen exakt definierten Komponenten aufgebaut werden kann. Das kommerziell erhältliche Kieselgel ist im Vergleich zum beim im Stand der Technik üblichen Kieselgur, das ein Naturstoff ist und daher in der Qualität Schwankungen unterworfen ist, chemisch exakt definiert. Weiter kommt man ohne teure Kolloid-Binder-Suspensionen aus. Durch das oben beschriebene Verfahren gelingt es, das Platin als extrem fein verteilte nanoskalige Schicht abzuscheiden, sodass der Gesamteinsatz an Platin wesentlich geringer ist als im bisher bekannten Stand der Technik üblich.

In einem weiteren Aspekt betrifft die vorliegende Erfindung die Verwendung des erfindungsgemäßen Katalysators in Oxidationsreaktionen, insbesondere zur Oxidation von Schwefelverbindungen, flüchtigen organischen Verbindungen (VOC) und Kohlenmonoxid.

Grundsätzlich ist die Möglichkeit der Totaloxidation von Abgasstromkomponenten mittels Platin-basierten Katalysatoren bekannt. Die Besonderheit der gegenständlichen Erfindung ist die Kombination der genannten Ausgangsstoffe bzw. daraus resultierenden Komponenten in der Beschichtung, die niedrige Raumbeladung an Platin und dessen geringe Partikelgröße, durch die die Eigenschaften des Katalysators zu Stande kommen.

Es hat sich gezeigt, dass das im erfindungsgemäßen Katalysator vorhandene Platin eine wesentlich niedrigere Zündtemperatur für die Oxidation z.B. von Schwefeldioxid aufweist. Die Zündtemperatur, auch Light-Off-Temperatur (LOT) oder Strike Temperatur genannt, ist die Temperatur, bei der der Katalysator effizient zu einem Umsatz der Reaktionsmischung führt. Als T50-Wert wird dabei der Wert verstanden, bei dem bei einer fixierten Raumgeschwindigkeit 50 % des maximal erreichbaren Umsatzes gefunden wird.

Um die Zündung besser beurteilen zu können, ist allerdings der T10 Wert, also der Wert bei dem 10 % des Maximalumsatzes erreicht werden, interessanter. Üblicherweise führt das Erreichen der T10 bzw. T20-Temperatur zum Zünden des ersten Katalysator-Bettes einer Anlage.

Es wurden mit erfindungsgemäßen Katalysatoren selbst bei geringerer Platin-Beladung Zündtemperaturen (T10-Wert) von unter 350°C, und sogar bis hinunter auf 250 °C festgestellt.

Dadurch ist ein wesentlich höherer Gesamtumsatz möglich. Beispielsweise kann bei der Anwendung der Schwefelsäureherstellung der Bedarf an Katalysator pro metrischer Tonne H₂SO₄, die erzeugt wird, auf ca. 65 Liter gesenkt werden. Bei einem auf Vanadiumoxid beruhenden Katalysator nach dem Stand der Technik würde man 200 Liter Katalysator benötigen.

Fig. 4 zeigt die Zündkurve eines nach 2 verschiedenen Verfahren hergestellten erfindungsgemäßen Katalysators im Vergleich zu einem dem Stand der Technik entsprechenden Vanadiumoxid-basiertem Katalysator auf Kieselgur am Messstand (Raumgeschwindigkeit 11000 l/h).

Dabei bedeuten die Kurven:

| | |
|---|---|
| ................... | Gleichgewicht (Equilibrum) |
| ·-◊- ·-◊-· | Vanadiumoxid-basierter Katalysator |
| -□-□- | Erfindungsgemäßer Katalysator "PPH-1" mit geringer Platindotierung (siehe Beispielsteil) |
| - -∘- - -∘- - | Erfindungsgemäßer Katalysator "PPH-2" mit hoher Platindotierung (siehe Beispielsteil) |

Aus dem Diagramm Fig. 4. ist erkennbar, dass die erfindungsgemäß mit Washcoat beschichteten Wabenkörper ein besseres Reaktionsverhalten gegenüber Vanadiumoxid-basierten Katalysatoren aufweisen. So ist ersichtlich, dass bei gleicher Raumgeschwindigkeit sowohl hoch- als niederdotierte Washcoat-Katalysatoren eine zwischen 50 °C und 100 °C niedrigere Zündtemperatur (T10) aufweisen als der Vanadium-basierte Katalysator.

Ein direkter Vergleich über den analysierten Temperatur Bereich (350 °C - 600 °C) ergibt eine um bis zu 100 % höhere Aktivität der erfindungsgemäßen Washcoat-Katalysatoren. Durch die höhere Aktivität bei gleichbleibender Raumgeschwindigkeit lässt sich eine deutliche Reduktion des Katalysatorbedarfs für großtechnische Anwendungen erwarten.

Die Kurve für Katalysator "PPH-1" zeigt die Leistung eines Katalysators mit niedriger Pt-Dotierung (0,37 g/L Pt), wobei bei der Herstellung der Beschichtung die erfindungsgemäß hergestellte Suspension (Schritt a)) vor dem Tränken des Trägersteins gemahlen wurde (Schritt b)). Die Kurve für Katalysator "PPH-2" zeigt die Leistung eines Katalysators, der mit höherer Dotierung (0,74 g/L Pt), aber ohne Mahlung der Suspension hergestellt wurde. Die Wirkung des Mahlschrittes ist durch Halbierung des Pt-Gehaltes bei ungefähr gleichbleibender Umsatz-Leistung evident. Weiters führt das Aufmahlen der Suspension ("PPH-1") auch zu einer noch niedrigeren Zündtemperatur.

Bei niedrigeren Zündtemperaturen lässt sich auch die Emission des Verfahrens reduzieren:

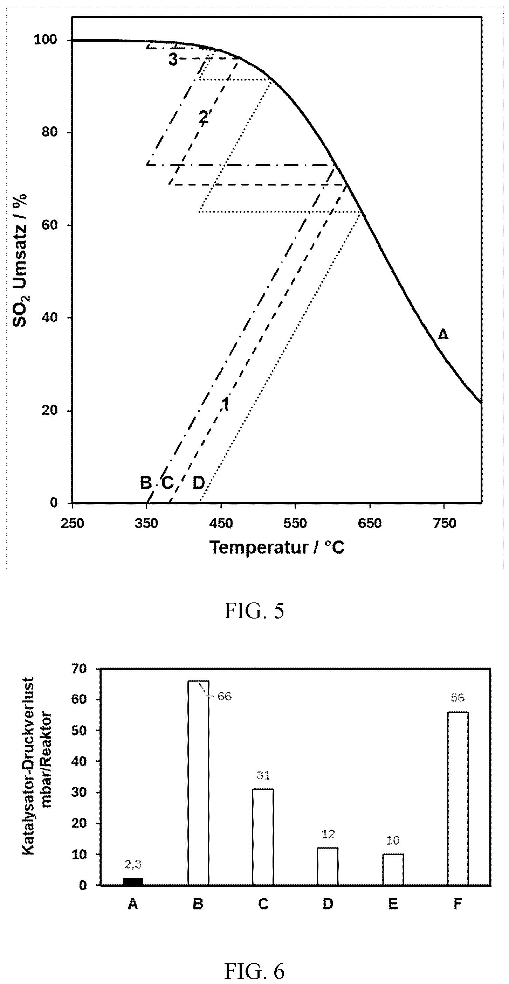

Figur 5 zeigt das Gleichgewichtsdiagramm der Simulation einer SO₂-Oxidation (12 Vol.-% SO₂, 11 Vol.-% O₂, 77 Vol.-% N₂) in einer klassischen mehrstufigen Schwefelsäure-Anlage (3+1) für einen erfindungsgemäßen Katalysator im Vergleich zu zwei Katalysatoren gemäß Stand der Technik.

### Dabei bedeuten:

| | |
|---|---|
| Kurve A) | Gleichgewicht (Equilibrum) |
| Kurve B) | Erfindungsgemäßer Katalysator |
| Kurve C) | Vanadiumpentoxid-Katalysator mit Cs-Promotierung |
| Kurve D) | Klassischer Vanadiumpentoxid-Katalysator |

### Weiters:

| | |
|---|---|
| Bereich 1) | Katalysatorbett 1 |
| Bereich 2) | Katalysatorbett 2 |
| Bereich 3) | Katalysatorbett 3 und 4 |

In der gezeigten Simulation wird eine Anlage mit 3 katalytischen Betten inklusive Zwischenkühler, nachfolgender Säureherstellung sowie darauffolgendem 4. Bett und erneuter Säureherstellung betrachtet.

Der klassische Vanadiumpentoxid-Katalysator (Kurve D) weist eine Zündtemperatur (Eintrittstemperatur) von 420 °C auf. In der Simulation resultiert daraus eine SO₂-Emission nach der letzten Stufe (4. Bett) von 258 ppm SO₂.

Der verbesserte Vanadiumpentoxid-Katalysator mit Cs-Promotierung (Kurve C) weist eine Zündtemperatur von 380 °C auf. In der Simulation resultiert daraus eine SO₂-Emission nach der letzten Stufe (4. Bett) von 20 ppm SO₂.

Der erfindungsgemäße Katalysator (Kurve B) weist eine Zündtemperatur (Eintrittstemperatur) von 350 °C auf. In der Simulation resultiert daraus eine SO₂-Emission nach der letzten Stufe (4. Bett) von nur 2 ppm SO₂.

Es ist ersichtlich, dass je früher das Zünden des Katalysators erfolgt, die theoretische Gesamtemission der Anlage sinkt. In der gezeigten Darstellung wird nur der Fall für das thermodynamische Equilibrium betrachtet.

Aus Figur 5 ist weiters ersichtlich, dass durch eine niedrigere Gaseintrittstemperatur am Katalysatorbett ein höherer Umsatz bei Erreichen des thermodynamischen Equilibriums über dasselbe erreicht werden kann. Dieser Effekt setzt sich über alle weiteren Katalysatorbetten fort und führt zu einer bis zu 80-fachen Schadstoffreduktion am Austritt des 4. Katalysatorbettes im Vergleich der dargestellten Gaseintrittstemperaturen von 350 °C bis 420 °C.

Der Einsatz des erfindungsgemäßen Katalysators führt weiter zu einer substanziellen Reduktion des Druckverlusts über einen mit dem Katalysator beladenen Reaktor.

Figur 6 zeigt die Bewertung des Druckverlustes am Katalysator für eine Doppelkontaktanlage zur Herstellung von Schwefelsäure mit einer Kapazität von 500 metrischen Tonnen pro Tag (4 Katalysatorbetten in einem zylindrischen Reaktor) als Vergleich des erfindungsgemäßen Katalysators mit verschiedenen Katalysatoren gemäß dem Stand der Technik.

### Dabei bedeuten:

| | |
|---|---|
| Säule A | Wabenkörper mit erfindungsgemäßem Katalysator |
| Säule B | 4 mm Pellets mit Vanadiumpentoxid-Katalysator beladen |
| Säule C | 6 mm Pellet mit Vanadiumpentoxid-Katalysator beladen |
| Säule D | Ring 10mm x 5mm mit Vanadiumpentoxid-Katalysator beladen |
| Säule E | Sternring 11mm x 4mm mit Vanadiumpentoxid-Katalysator beladen |
| Säule F | Sternring "Typ 2" mit Vanadiumpentoxid-Katalysator beladen |

Es wird der Druckverlust in mbar angegeben.

Aus Diagramm Figur 6 ist erkennbar, dass durch den Einsatz von Wabenkörpern als Katalysatorträger eine substanzielle Druckverlustreduktion über den mit Katalysator beladenen Reaktor ermöglicht wird. Im Vergleich zu Stand der Technik Katalysatorformen (Pellets und Ringe) kann bei der bespielhaft analysierten Anlage ein Druckverlustvorteil zwischen 63,7 mbar und 7,7 mbar über die Katalysatorbetten erreicht werden.

Beim Einsatz des erfindungsgemäßen Katalysators zur Herstellung von Schwefeltrioxid (SO₃) aus Schwefeldioxid (SO₂), Carbonylbisulfid (CS₂), Schwefelwasserstoff (H₂S), Carbonylsulfid (COS) kann die jeweilige schwefelhaltige Verbindung in der Gasphase über den Katalysator mit Sauerstoff zur Reaktion gebracht werden.

Bei der Reaktion kann ein Druck zwischen 10 mbar bis 30 bar, bevorzugt 20 mbar eingestellt werden.

Die Temperatur über den Katalysator kann zwischen 200 °C bis 800 °C, bevorzugt 380 °C - 400 °C eingestellt werden.

Die SO₂-Konzentration im Ausgangsgas kann von 0,3 bis 25 Vol.-%, vorzugsweise 4 - 13 Vol.-% in Schwefelsäureanlagen, und 0,3 Vol.-% in der Abluftreinigung betragen.

Die O₂-Konzentration im Reaktionsgas kann von 0,5 Vol.-% bis 25 Vol.-%, vorzugsweise 6 Vol.-% bis 12 Vol.-% betragen.

Der erfindungsgemäße Katalysator kann auch zur Totaloxidation von Kohlenmonoxid in komplexen Gasatmosphären eingesetzt werden. Als komplexe Gasatmosphären sind solche zu erachten, die nicht nur zu oxidierendes Gas wie z.B. Kohlenmonoxid und VOCs (Volatile Organic Carbons) nebst dem erforderlichen Sauerstoff enthalten, sondern auch Katalysatorgifte. Es wurde gefunden, dass sich der erfindungsgemäße Katalysator im Einsatz in Anwesenheit von Arsen, Blei, Phosphor, Cobalt, Fluorwasserstoffgas und Schwefeldioxid bei tiefen Reaktionstemperaturen bewährt, sofern die Dimensionierung des Katalysatorbettes ausreichend erfolgt.

Es ist zu beobachten, dass bei Anwesenheit von Schwefeldioxid eine Reaktionstemperatur um die 350 °C vorteilhaft ist. Bei Anwesenheit der genannten Katalysatorgifte hat sich eine Überdimensionierung des Katalysatorvolumens um den Faktor 2 - 10, bevorzugt 8 als erfolgreich und brauchbar erwiesen.

Bei der Totaloxidation von Kohlenmonoxid kann ein Ausgangsgas mit einer CO-Konzentration von 10 ppmV bis 250.000 ppmV, bevorzugt 2400 ppmV, mit einem Sauerstoffhaltigem Gas, mit einer Sauerstoff-Konzentration von 1 Vol.-% bis 25 Vol.-%, bevorzugt 20 Vol.-% zur Reaktion gebracht werden.

Der Katalysator kann zum Beispiel zur Oxidation der im Folgenden genannten maximal in einem Gasstrom auftretenden Stoffe verwendet werden:
Bis zu 15 Vol.-% SO2
Bis zu 10 % CO
Bis zu 10 % VOC,
dies jeweils mit einem tolerierbaren Gehalt von bis zu 100ppmV HF und/oder 100 ppmV HCl.

Die Reaktion kann bevorzugt bei einer Temperatur von 200 bis 700 °C, bevorzugt 400 °C geführt werden.

Der erfindungsgemäße Katalysator kann in mehrfachen katalytisch aktiven Betten in Reaktoren eingebaut werden, sodass zuerst eine Zündschicht mit niedrigerer Platinbeladung, danach eine Arbeitsschicht mit hoher Platinbeladung und danach eine Schicht zur Finalisierung der Reaktion mit niedrigerer Platinbeladung folgt.

Das hat zur Folge, dass man sich immer im optimalen Bereich der Zündkurve bewegt und den Einsatz des teuren Platin-Metalls so gering als möglich gehalten werden kann. Die niedrigere Platinkonzentration wird durch die höhere Prozessgastemperatur kompensiert.

Hierzu kann eine Zündschicht mit einem Platin-Gehalt von 0,02 - 0,4 g/L, bevorzugt 0,025 g/L eingebaut werden.

Die Arbeitsschicht kann einen Platin-Gehalt von 0,2 - 1,2 g/L, bevorzugt 0,4 g/L aufweisen.

Die Schicht zur Finalisierung der Reaktion (engl. "polishing layer") kann einen Platin-Gehalt im Bereich von 0,15 - 0,7 g/L, bevorzugt 0,2 g/L aufweisen.

Die Zündschicht kann so im Katalysatorbett des Reaktors eingebaut werden, dass sie entweder erst auf der katalytisch aktiven Seite oder auf der katalytisch inerten (unbeschichteten) Seite angeströmt wird. Bevorzugt wird der Einbau so, dass die katalytisch aktive Seite den Prozessgasstrom zuerst berührt und die katalytisch inerte Seite der thermischen Equilibrierung dient, bzw. das Katalysatorbett reaktionsträger macht. Das ist insbesondere bei Gasströmen mit schwankender Zusammensetzung von Vorteil.

Die katalytisch aktiven Betten bestehend aus den erfindungsgemäßen Katalysatoren können so aufgebaut sein, dass zwischen den katalytisch aktiven Feldern auch Felder mit inerten Steinen eingebaut werden, um ein Überhitzen der Katalysatorsteine zu verhindern und die katalytisch aktiven Betten thermisch träger zu machen. Auch das ist insbesondere bei Gasströmen mit schwankender Zusammensetzung von Vorteil.

Hierzu können pro Bett 1 - 30 %, bevorzugt 15 % der katalytisch aktiven Steine durch inerte Steine ersetzt werden. Die inerten Steine können mit den Kanälen horizontal zur Gasströmungsrichtung eingebracht werden, sodass sie nicht vom Prozessgas durchströmt werden.

Die katalytisch aktiven Steine können auch nicht in eine separate Katalysator-Box, sondern direkt ohne thermische Verluste in einen Heißgasfilter auf der Reingasseite eingebaut werden. Hierdurch kann eine möglichst hohe Reaktionstemperatur realisiert werden, ohne dass es zu Wärmeverlusten über in Rohrleitungen kommt.

### Beispiele:

Im Folgenden werden die Messmethoden zur Bestimmung einzelner Komponenten der gegenständlichen Erfindung aufgezählt, sowie wenn vorhanden Komplementärmethoden genannt.

### Messmethoden

Die Messung des Platin-Gehalts in der Beschichtung kann, beispielsweise nach Abschaben eines Teils der Beschichtung, mittels ICP-OES bzw. ICP-MS erfolgen.

Die Messung der Gehalte von Zr, B, Al, Si, und weiteren anorganischen Nebenbestandteilen kann ebenfalls mittels ICP-OES vorgenommen werden und über stöchiometrische Rückrechnung auf den Anteil an den jeweiligen Oxiden geschlossen werden.

Für alle Messungen mittels ICP-OES kann vor der eigentlichen Messung ein Hochdruck-Mikrowellenaufschluss durchgeführt werden, um die Analyten in eine lösliche Form zu bringen.

Die Partikelgrößenverteilung in der Suspension, unter anderem der d50-Wert einer Q3-Verteilung, kann mittels Siebturmanalyse oder Laserbeugungsmessung im nassen oder trockenen Messverfahren bestimmt werden.

Die Partikelgröße der platinhaltigen Partikel in der Beschichtung kann mittels transmissionselektronenmikroskopischer Auswertung der Beschichtungsfläche bestimmt werden.

Alternativ ist eine Chemisorptionsmessung mit H₂-Gas und CO-Gas zur Bestimmung der Partikelgröße möglich. Von der Firma Anton Paar ist beispielsweise unter dem Namen Autosorb iQ-C ein Gassorptions-Analysegerät erhältlich, mit welcher die BET-Oberfläche, aktive Fläche und durchschnittliche Partikelgröße von aktivem Beschichtungsmaterial bestimmt werden kann.

Sollten die Ergebnisse der Partikelgrößenbestimmung nach Chemisorption mit H₂-Gas und CO-Gas voneinander abweichen, kann der Mittelwert der Ergebnisse herangezogen werden.

### Ausführungsbeispiel

Im Folgenden wird die Präparation des in der gegenständlichen Erfindung eingesetzten Katalysators beschrieben.

Eine Suspension wurde hergestellt, indem die Komponenten in den wie folgt dargestellten Mengenverhältnissen (bezogen auf das Gewicht) miteinander in der oben angegebenen Reihenfolge jeweils unter starkem Rühren vermischt werden:

| **Normiertes Gewicht** | **Komponente** |
|---|---|
| 1,000 | H2O |
| 0,013 | Zr(NO3)4 |
| 0,013 | B2O3 |
| 0,003 | Zitronensäure |
| 0,037 | NH3 32 % |
| 0,022 - 0,044* | Pt(II)(NO3)2 |
| 0,007 | CLIQSPERSE^{®}152 |
| 0,0004 | Foamstop^{®} |
| 0,039 | Disperal^{®} P2 |
| 0,405 | Kieselgel G |

| | |
|---|---|
| * Einsatzmenge 0,044 normiertes Gewicht an Pt(II)(NO3)2 für 0,72 g Pt/L am fertigen Katalysator, Einsatzmenge normiert 0,022 für 0,37 g Pt/L am fertigen Katalysator. | |

Der pH-Wert der Suspension nach Zugabe der letzten Komponente liegt ca. bei 8.

Optional kann diese Suspension durch Mahlung auf die beschriebene Zielpartikelgröße von ca. 8 +/- 1 µm als d50 einer Q3-Verteilung eingestellt werden.

Bei der Beschichtung der Träger wird wie folgt vorgegangen:
Der Trägerstein mit der bevorzugten Abmessung von 150x150x300 mm wird erst in Wasser getaucht. Überschüssiges Wasser wird ausgeschüttelt bzw. mit Druckluft entfernt.

Danach wird der feuchte Trägerstein in die fertige Suspension getaucht und der Überschuss am Stein mittels Druckluft ausgeblasen, sodass eine Beladung entsteht, die der gewünschten Zielbeladung nach dem Brand entspricht.

Der in die Suspension getränkte Stein wird zum Trocknen für ca. 12 Stunden bei Raumtemperatur belassen.

Danach erfolgt das Trocknen, Entbindern und Kalzinieren im Zuge des Brandes nach dem in Fig. 2 dargestellten Programm im Umluftofen.

Dadurch entsteht ein Katalysator mit einer Endbeladung an katalytisch aktivem Material im Bereich von 1,80 - 1,99 Gew.-%.

Zwei beispielhafte Katalysatoren wurden mit folgenden Parametern hergestellt:
"PPH-1" niedrige Platinbeladung (0,37 g/L Pt) mit Mahlen der Suspension vor Tränkung des Trägersteins
"PPH-2" höhere Platinbeladung (0,74 g/L Pt) ohne Mahlen der Suspension vor Tränkung des Trägersteins.

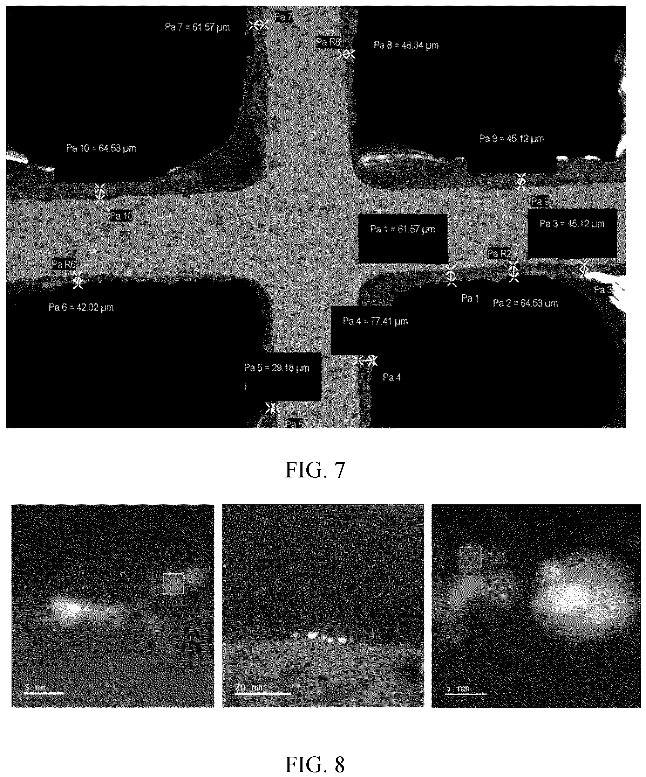

Fig. 7 zeigt eine elektronenmikroskopische Aufnahme der sogenannten Gasaustauschschicht (dunkle Schicht), die sich durch Einbrennen der Washcoat-Suspension auf dem Substrat (heller Bereich) ausbildet. Sie ist dafür verantwortlich, das Edelmetall aufzunehmen und eine möglichst hohe Oberfläche zu realisieren. Weiter ist es von wichtiger Bedeutung, die passende Porengröße für die Gasdiffusion zur Verfügung zu stellen, die unter anderem für die Steilheit der Zündkurve verantwortlich ist. Die Dicke der Schicht liegt im Beispiel von Fig. 7 bei durchschnittlich 45 µm bis 55 µm.

Durch den oben beschriebenen Syntheseweg ist eine Feinheit der aktiven platinhaltigen Partikel in Nanometer-Bereich zugänglich, die in Fig. 8 in einer TEM-Aufnahme dargestellt ist. Der Vorteil bei der beschriebenen Synthese ist, dass Feinheiten der Platin-Verteilung zugänglich sind, ohne dass eine Reduktion mit Wasserstoff bei z.B. 300 - 400 °C erforderlich ist.

## Patentansprüche

1. Katalysator, umfassend einen Träger und eine katalytisch aktive ausgehärtete Beschichtung, wobei der Träger aus einer Keramik besteht und die aktive Beschichtung platinhaltige Partikel enthält, **dadurch gekennzeichnet, dass** die katalytisch aktive Beschichtung SiO₂ in einem Anteil von 75 Gew.-% bis 85 Gew.-% und Al₂O₃ in einem Anteil von 5 Gew.-% bis 8 Gew.-% umfasst, und dass die durchschnittliche Partikelgröße der platinhaltigen Partikel 15 nm und weniger, bevorzugt 10 nm und weniger, beträgt.

2. Katalysator gemäß Anspruch 1, **dadurch gekennzeichnet, dass** der Gehalt der platinhaltigen Partikel von 0,002 g/L bis 1,48 g/L bezogen auf das Katalysatorvolumen (Träger und ausgehärtete Beschichtung) und bezogen auf metallisches Platin, insbesondere 0,15 g/L bis 1,3 g/L, bevorzugt 0,02 g/L bis 1,3 g/L, insbesondere bevorzugt 0,02 g/L bis weniger als 0,4 g/L beträgt.

3. Katalysator gemäß Anspruch 1 oder 2, **dadurch gekennzeichnet, dass** das in der Beschichtung enthaltene SiO₂ eine Kieselgel-Morphologie aufweist.

4. Katalysator gemäß einem der vorhergehenden Ansprüche, **dadurch gekennzeichnet, dass** das in der Beschichtung enthaltene Al₂O₃ in γ-Al₂O₃-Form vorliegt.

5. Katalysator gemäß einem der vorhergehenden Ansprüche, **dadurch gekennzeichnet, dass** das Material der Keramik des Trägers aus der Gruppe bestehend aus Cordierit, Mullit, Korund oder Korund-Mullit, bevorzugt Cordierit, ausgewählt ist.

6. Katalysator gemäß einem der vorherigen Ansprüche, **dadurch gekennzeichnet, dass** die Beschichtung Zirkoniumoxid enthält.

7. Katalysator gemäß einem der vorherigen Ansprüche, **dadurch gekennzeichnet, dass** die Beschichtung Boroxid enthält.

8. Katalysator gemäß einem der vorherigen Ansprüche, **dadurch gekennzeichnet, dass** die Beschichtung Calciumsulfat enthält.

9. Verfahren zur Herstellung eines Katalysators gemäß einem der vorherigen Ansprüche, umfassend die folgenden Schritte:
a) Herstellen einer Suspension durch Mischen (in folgender Reihenfolge) von
- Wasser
- gegebenenfalls einem Vorläufer von Zirkoniumoxid
- Boroxid
- einem sauren oder basischen Chelatkomplexbildner
- einer zur Bildung eines Puffers mit dem sauren oder basischen Chelatkomplexbildner befähigten Base oder Säure
- einem löslichen Vorläufer von metallischem oder oxidiertem Platin,
- einem organischen Dispergiermittel
- Entschäumer
- Böhmit mit freien Nitro-Gruppen
- ein Kieselgel
- eine Calciumsulfat-Quelle
b) gegebenenfalls Mahlen der Suspension
c) Tauchtränkung eines keramischen Trägers mit der Suspension
d) Trocknen und Aushärten des getränkten Trägers

10. Verfahren gemäß Anspruch 9, **dadurch gekennzeichnet, dass** als saurer Chelatkomplexbildner Zitronensäure eingesetzt wird.

11. Verfahren gemäß Anspruch 9 oder 10, **dadurch gekennzeichnet, dass** als zur Bildung eines Puffers befähigte Base Ammoniak eingesetzt wird.

12. Verfahren gemäß einem der Ansprüche 9 bis 11, **dadurch gekennzeichnet, dass** ein Gips enthaltendes Kieselgel eingesetzt wird.

13. Verfahren gemäß einem der Ansprüche Anspruch 9 bis 12, **dadurch gekennzeichnet, dass** im Schritt b) eine Partikelgröße (d₅₀) von 6 µm bis 10 µm, bevorzugt 7 µm bis 9 µm eingestellt wird.

14. Verwendung eines Katalysators gemäß einem der Ansprüche 1 bis 8 in Oxidationsreaktionen, insbesondere zur Oxidation von Schwefelverbindungen, flüchtigen organischen Verbindungen (VOC) und Kohlenmonoxid.

15. Verwendung gemäß Anspruch 14 in komplexen Gasatmosphären.
